# EUROPEAN PATENT APPLICATION

(11) **EP 4 797 198 A1**
(43) Date of publication of application: **26.08.2026**
(21) Application number: 25189109.9
(22) Date of filing: 11.07.2025
(51) Int. Cl.: G06T 5/50, G06T 5/70

(54) **SYSTEM AND METHOD FOR PROCESSING MEDICAL IMAGE DATA**

(71) Applicant: Siemens Healthineers AG, 91301 Forchheim (DE)
(72) Inventor: Fournié, Eric, 91054 Erlangen (DE)
(74) Representative: Siemens Healthineers Patent Attorneys

(57) **Abstract**

The invention relates to a system (20) for processing medical image data, the system (20) comprising:
- a data interface (21), configured for receiving a pair of image-datasets, the pair of image-datasets comprising an R-image-dataset (13) with a high signal-to-noise ratio and an N-image-dataset (14) with a low signal-to-noise ratio,
- a mixing-unit (23), configured for mixing, in particular adding, the R-image-dataset (13) to the N-image-dataset (14) in a weighted mixing manner,
- an untangling-unit (24), configured for untangling, in particular subtracting, a reference-dataset (15) from a processed-dataset (17) in a weighted untangling manner,
- an output-unit (25), configured for outputting an output-dataset (18),
wherein the system (20) is configured for
a) applying an Al model (22) to the R-image-dataset (13), wherein the reference-dataset (15) is generated,
b) mixing the R-image-dataset (13) and the N-image-dataset (14) by the mixing-unit (23), wherein a work-dataset (16) is generated,
c) applying the Al model (22) to the work-dataset (16), wherein the processed-dataset (17) is generated,
d) untangling the reference-dataset (15) from the processed-dataset (17) by the untangling-unit (24), wherein the output-dataset (18) is generated,
e) outputting the output-dataset (18) by the output-unit (25).

## Description

The invention relates to a system and a method for processing medical image data, a medical device, and a medical system.

In medical imaging there are situations where images are carrying noise. This noise is already present in the raw data and affects any reconstructed images. The amount of noise in an image may be represented by the signal-to-noise ratio, abbreviated as SNR. The signal-to-noise ratio is a measure of noise against the "normal" signal. A high SNR means that there is low noise, a low SNR means that there is a high noise level. Noise may e.g., occur in X-ray images, where typically high-energy images have a high SNR ("low-noise-images"), since high energy X-rays can be compared to a strong illumination, resulting in "cleaner" images. However, noise may also occur in MRI images wherein images acquired with sparse sampling techniques often have a lower SNR than images acquired with normal sampling techniques.

Looking at multi-energy X-ray imaging as an example, this technique allows the acquisition of patient data corresponding to different X-ray energies, which in turn can be used to provide clinical information. Multi-energy X-ray imaging can be achieved for example in the context of photon counting computer tomography (CT) or several types of dual-energy CT systems (dual source, dual-layer detectors, fast kV switching) as well as mammography or conventional radiography using dual-layer detectors.

Deep learning methods can be used, for example, to improve the measured signal quality, reduce image artifacts, complete incomplete data, or automatize partly or fully the diagnostic. As some X-ray energies can display higher levels of noise, some of the structures processed by such systems can be not recognizable anymore or too noisy to be efficient processed while other energies are better suited.

To mitigate the problems presented by noisy energies, the following approaches can be used:
a) Train the deep learning model using data corresponding to all the available energies. The advantage is that one single system could be used for all energies. The disadvantage is that training is seriously more time-consuming and needs more overall energy. In addition, processing of noisy images may be suboptimal, training on all images (noisy and non-noisy) may decrease the performance on energies that are less noisy.
b) Train one individual network for each available energy. The advantage is that it does not compromise the processing of low-noise images. The disadvantage is that for high-noise images (low SNR) it may not be enough to recognize noisy structures. Overall, there is a longer training due to the training of multiple Al models. Thus, more computational resources (computing time as well as hardware) are needed.

It is the object of the present invention to improve the known systems and methods and provide a system and a method for processing medical image data, a medical device, and a medical system, for overcoming the above-described problems. Especially, it is an object to efficiently process multi-energy X-ray data to improve image quality and/or to reduce noise.

This object is achieved by a system according to claim 1, a method according to claim 9, a medical device according to claim 12 and a medical system according to claim 13.

A system for processing medical image data is hereby disclosed. It comprises the following components:
- a data interface, configured for receiving image-datasets,
- a mixing-unit, configured for adding the R-image-dataset to the N-image-dataset of a pair of image-datasets in a weighted manner,
- an untangling-unit, configured for untangling, in particular subtracting, two image-datasets processed by the Al model in a weighted manner,
- an output-unit, configured for outputting an image-dataset,
wherein for a pair of image-datasets, comprising an R-image-dataset with a high signal-to-noise ratio and an N-image-dataset with a low signal-to-noise ratio, the system is configured for
a) generating a reference-dataset by processing the R-image-dataset of the pair with the Al model,
b) generating a work-dataset by mixing the R-image-dataset and the N-image-dataset of the pair with the mixing-unit,
c) generating a processed-dataset by processing the work-dataset with the Al model,
d) generating an output-dataset by untangling the reference-dataset from the processed-dataset with the untangling-unit,
e) outputting the output-dataset.

The system serves for processing medical image-data. That could e.g., be de-noising, segmenting, healing artifacts or other processes. The type of process ("process-type") depends on the trained Al model used. It should be noted that the system could comprise several Al models for different purposes (process-types).

The image data is preferably dual or multi-energy X-ray image data or MRI-image-data. Normal X-ray projection-data could also be used. In general, the system is advantageous for all kinds of medical data where pairs of images with systematical different SNR are recorded. The image-datasets may show the same scene and/or the same object from the same angle of view. Although images could be registered onto each other, it is preferred that the motive shown by the images is identical or at least very similar. The system is not only advantageous for images recorded as pairs (or more images like e.g., multi-energy CT images), but also for single images that are artificially de-noised, wherein the de-noised image and the initial image form a pair.

Data interfaces suitable for the system are well known in the art. It should be noted that even the input nodes of the Al model could be regarded as data interface. However, since several different image-datasets are generated, it is preferred that the data interface is an individual interface of the system.

The system is configured to process a pair of image-datasets. This pair may be received (e.g., recorded image-datasets) or generated (de-noising an image-dataset with an internal de-noising-unit). The image-datasets may be related to the same examination area, in particular of an object. The object may be, for example, a patient. The image-datasets may be acquired from the same examination area through medical imaging and/or may comprise a representation of the same examination area. It is advantageous when the recording position of the shown object as well as the angle of view on the shown object is the same or at least very similar. When using multiple-energy image-datasets, they may be recorded at the same time or at least during very close time-intervals. The image-datasets could be raw-data, 2D image data or 3D image-data. When using MRI-images, the recorded object/patient should not have been moved much. In short: the two image-datasets represent (show at least after a reconstruction) the same scene with different noise-levels.

In order to differentiate the two image-datasets of a pair, they are designated "R-image-dataset" (the "R" refers to "reference") with a high signal-to-noise ratio, i.e. low noise, and an N-image-dataset (the "N" should indicate "noise") with a low signal-to-noise ratio, i.e. high noise. These image-datasets are processed by the Al model. The outputs when processing the two image-datasets with the Al-system could seriously differ, since one image-dataset comprises more noise than the other.

The Al model may be trained for processing an image-dataset according to a predefined process-type, e.g., segmenting an image. This Al model should be trained with low-noise image-datasets, since high-noise datasets make a training difficult. However, it is not necessary to train it with "perfect" image-datasets since a little noise during training would make the Al model more robust. Training an Al model is well known in the art. For example, it could be trained in a supervised manner wherein (relatively low-noise) image-datasets are inputted while these image-datasets are annotated with a ground-truth according to the desired process-type, e.g., with segmentations or with healed artifacts. In short: The Al model is thus configured for processing the R-image data better than the N-image-data. Regarding high and low energy image-datasets in CT, the Al-system is preferably trained with high energy image-datasets.

This Al model would work well with the R-image data, but not so well with the N-image-data. However, instead of using a second AI model, a solution is hereby proposed how to use the same Al model for low-noise datasets and for high-noise datasets. Swiftly outlined, the trick is lowering the noise of the noisy image-dataset with the help of the low-noise image-dataset, then processing the resulting lower-noise-image-dataset and after that removing the low-noise contribution again. More detailed the "trick" works as explained in the following:
The system comprises a mixing-unit for mixing the two image-datasets of a pair. It is configured for taking a pair and adding the R-image-dataset to the N-image-dataset in a weighted manner.

This happens preferably pixel-by pixel for corresponding pixel. The higher the contribution of the R-image-dataset, the better the result of the Al model, however, also the contribution of the R-image-dataset to the result is higher. It is advantageous, if the contribution of the R-image-dataset is below 50%, especially below 30%. Depending on the SNR of the N-image-dataset, the contribution of the R-image-dataset may be less than 20% or even less than 10%.

The resulting image-dataset is designated as "work-dataset". When the work-dataset is DW, the R-image-dataset is DR, the noisy N-image-dataset is DN and there is a predefined weight factor x with 0 < x < 1, then it is preferred that DW = xDN + (1-x)DR. The weight factor x is preferably > 50% or even > 70%. It is preferred that the image-datasets are added pixel-wise by adding the pixel-values of corresponding pixels.

The system also comprises an untangling-unit. It is configured for subtracting two image-datasets that have been processed by the Al model in a weighted manner. This will be the processed R-image-dataset and the processed work-dataset.

The resulting image-dataset is designated "output-dataset". When the output-dataset is S, the processed R-image-dataset is SR and the processed work-dataset is SP, then it is preferred that S = (SP - (1-y) ˙ SR) / y with a weight factor y with 0 < y < 1, preferably y = x. It is also preferred that the image-datasets are subtracted pixel-wise by subtracting the pixel-values of corresponding pixels.

The output-unit outputs the resulting image-dataset. Such output-units are well-known in the art.

When there is a pair of image-datasets (this also means the case that an image-dataset and its de-noised counterpart form a pair) the system performs the following steps:
a) Generate a reference-dataset by processing the R-image-dataset of the pair with the Al model. This is the dataset that is later subtracted by the untangling-unit. First the R-image-dataset is added and later the processed R-image-dataset (i.e., the reference-dataset) is subtracted again.
b) Generate a work-dataset by mixing the R-image-dataset and the N-image-dataset of the pair with the mixing-unit. As said above, the (mixed) work-dataset has lower noise than the (pure) N-image-dataset since it has a contribution from the (lower-noise) R-image-dataset.
c) Generate a processed-dataset by processing the work-dataset with the Al model. The result will be better than processing the (pure) N-image-dataset, since the work-dataset has less noise (due to the contribution of the R-image-dataset). However, the processed-dataset has the contribution of the R-image-dataset that should be minimized.
d) Generate an output-dataset by untangling the reference-dataset from the processed-dataset with the untangling-unit. This is done by subtracting the reference-dataset (the processed R-image-dataset) from the processed-dataset (the processed work-dataset with the R-image-dataset contribution).
e) Output the output-dataset.

A method is hereby disclosed for processing medical image data with a system according to the invention. The method comprises the following steps:
- providing a pair of image-datasets, the pair of image-datasets comprising an R-image-dataset with a high signal-to-noise ratio and an N-image-dataset with a low signal-to-noise ratio,
- generating a reference-dataset by processing the R-image-dataset of the pair with the Al model of the system,
- generating a work-dataset by mixing the R-image-dataset and the N-image-dataset of the pair with the mixing-unit of the system,
- generating a processed-dataset by processing the work-dataset with the Al model of the system,
- generating an output-dataset by untangling the reference-dataset from the processed-dataset and the reference-dataset, with the untangling-unit of the system,
- outputting the output-dataset.

Aspects of the method have already been described above.

First a pair of image-datasets comprising the R-image-dataset and the N-image-dataset is provided. Then, the reference-dataset is generated by processing the R-image-dataset of the pair with the Al model of the system and the work-dataset is generated by mixing (e.g., adding) the R-image-dataset and the N-image-dataset. Then the processed-dataset is generated by processing the work-dataset with the Al model and an output-dataset is generated by untangling the reference-dataset from the processed-dataset. The output-dataset has a minimal contribution of the R-image-dataset on the one hand, but, on the other hand, a good quality after being processed by the Al-system due to the reduced noise.

The Al model may be a trained Al model. The Al model may be a machine learning model, in particular a deep learning model. In general, a trained machine learning model mimics cognitive functions that humans associate with other human minds. In particular, by training based on training data the machine learning model is able to adapt to new circumstances and to detect and extrapolate patterns. Another term for "trained machine learning model" is "trained function". In general, parameters of a machine learning model can be adapted by means of training. In particular, supervised training, semi-supervised training, unsupervised training, reinforcement learning and/or active learning can be used. Furthermore, representation learning (an alternative term is "feature learning") can be used. In particular, the parameters of the machine learning models can be adapted iteratively by several steps of training. In particular, within the training a certain cost function can be minimized. In particular, within the training of a neural network the backpropagation algorithm can be used. In particular, a machine learning model can comprise a neural network, a support vector machine, a decision tree and/or a Bayesian network, and/or the machine learning model can be based on k-means clustering, Q-learning, genetic algorithms and/or association rules. In particular, a neural network can be a deep neural network, a convolutional neural network or a convolutional deep neural network. Furthermore, a neural network can be an adversarial network, a deep adversarial network and/or a generative adversarial network.

In praxis, concerning dual or multi-energy image data, the Al model is preferably only trained on data corresponding to the X-ray energies presenting the lowest amounts of noise. Once trained, the Al model can be used directly on (low-noise) R-image-datasets to generate the reference datasets. To process noisy N-image-datasets, they are multiplied with a weight factor between 0 and 1. This product is added to the R-image-dataset (the dataset with the lowest amount of noise) multiplied by one minus the weight factor. The resulting work-dataset is then used as input to the trained Al model, leading to a processed work-dataset (processed-dataset). The AI model is also used on the (low noise) R-image-dataset and the result (reference-dataset) is multiplied by one minus the weight factor. This reference-dataset is then subtracted from the processed-dataset and the result is divided by the weight factor, leading to a prediction that can be used as an approximation of the results.

By adding a high-noise image-dataset to a low-noise one, the high-noise image-dataset can be seen as the noise on an imperfect measurement while the low-noise image-dataset will display clear structures that will be easier to process and help the Al model. For the method to work well, the Al model may be trained on noisy data, also (however not as noisy as the N-image-datasets). The proposed solution allows to train a single neural network on data that is easy to process (e.g. the R-image-datasets) and to use the results on more problematic N-image-datasets. While the prediction of high-noise image-dataset needs two runs of the same Al model, this is a minor disadvantage with regard to the easier training and improved predictions.

A medical device is hereby disclosed for processing multi-energy image-data. It comprises a system according to a solution disclosed herein or configured for performing a method according to a solution disclosed herein.

A medical system is hereby disclosed that may be, for example, a medical imaging system or a diagnostic system, and comprises a device according to a solution disclosed herein.

The method could also be a computer-implemented method. Some units or modules of the system solutions mentioned above can be completely or partially realized as software modules running on a processor of a computing system. A realization in the form of software modules can have the advantage that applications already installed on an existing computing system can be updated, with relatively little effort, to install and run these units of the present application. The invention also relates to a computer program product with a computer program that is directly loadable into the memory of a computing system, and which comprises program units to perform the steps of the methods, at least those steps that could be executed by a computer, when the program is executed by the computing system. In addition to the computer program, such a computer program product can also comprise further parts such as documentation and/or additional components, also hardware components such as a hardware key (dongle etc.) to facilitate access to the software.

A computer readable medium such as a memory stick, a hard-disk or other transportable or permanently-installed carrier can serve to transport and/or to store the executable parts of the computer program product so that these can be read from a processor unit of a computing system. A processor unit can comprise one or more microprocessors or their equivalents.

Particularly advantageous embodiments and features of the invention are given by the dependent claims, as revealed in the following description. Features of different claim categories may be combined as appropriate to give further embodiments not described herein.

According to a preferred embodiment of the invention, the pair of image-datasets is a pair of X-ray image-datasets comprising an HE-image-dataset recorded at a high X-ray energy and a LE-image-dataset recorded at a low X-ray energy and the system is configured for treating the LE-image-dataset as R-image-dataset (low-noise-dataset) and the LE-image-dataset as N-image-dataset (high-noise-dataset). It is preferred that the image-datasets are recorded together, however, for scanners that do not have the ability to acquire different energies at the same time the second data acquisition may take place directly after the first one. The Al model is preferably trained with HE-image-datasets.

According to a preferred embodiment of the invention, the pair of image-datasets comprises a source-image-dataset as N-image-dataset and a de-noised source-image-dataset as R-image-dataset. The Al model is preferably trained with the de-noised source-image-datasets. This could e.g., be useful for field-of-view extension or operations on multi-energy signals or simply for minimizing the effect of an external de-noising unit.

According to a preferred embodiment of the invention, the pair of image-datasets are MRI image-datasets, preferably comprising different contrasts and/or based on different acquisition procedures. This is, e.g., advantageous when scanning the same body region of a patient with two different sequences in rapid succession.

As already said above, the image-datasets could be raw data or reconstructed images, especially CT-images or MRI images. The images could be 3D image-datasets or 2D image-datasets. However, the Al model may be trained accordingly with the image-datasets that are later used. The system may comprise different Al models, one trained with raw-data and another one trained with reconstructed images.

According to a preferred embodiment of the invention, for generating the work-dataset DW the mixing-unit is configured to add the R-image-dataset DR to the N-image-dataset DN, preferably pixel-wise by adding the pixel-values of corresponding pixels, with a predefined weight factor x (especially between 0 and 1) following the Formula DW = x ˙ DN + (1-x) ˙ DR. It is preferred that x > 0,5, especially x > 0,7 and x < 1.

According to a preferred embodiment of the invention, for generating the output-dataset S the untangling-unit is configured to subtract the reference-dataset SR from the processed-dataset SP with a predefined weight factor y following the Formula S = (SP - (1-y) ˙ SR) / y, It is preferred that y = x.

According to a preferred system, the Al model is trained for processing the pair of image-datasets according to at least one process-type of the group comprising "improving the measured signal quality", "de-noising", "reducing image artifacts", "completing incomplete data", "automatizing diagnostics" (partly or fully), "segmenting" and "pre-processing".

According to a preferred system, the Al model has been trained with low-noise-datasets, e.g., high energy X-ray image-datasets, preferably R-image-datasets. These datasets have preferably been used for training predominantly (i.e., some high-noise image-datasets have been used). However, it is also preferred that these datasets have exclusively been used for training.

It should be noted that "high noise" and "low noise" are at first sight relative measures. However, in the respective fields of medicine, it is well known what are "high noise images" and "low noise images". Generally, one could say that there is a predefined threshold for an SNR given and images with an SNR under this threshold are regarded as high noise images and those with an SND above this threshold as low noise images.

A preferred embodiment of the invention is configured for handling three or more image-datasets. They are processed in that varying combinations of pairs of image-datasets are formed (from the initial datasets). After processing, the respective output-images are preferably compared with each other or used to form further pairs of image-datasets that are again processed with the Al model or with another Al model.

There could preferably be different Al models trained for processing received image-datasets according to a predefined process-type. It is preferred that the system comprises a first Al model and a second AI model trained for processing received image-datasets according to different process-types.

For (processing) a pair of image-datasets, the system is preferably configured for:
- generating multiple work-datasets by mixing the R-image-dataset and the N-image-dataset of the pair with the mixing-unit with different mixing ratios x,
- generating a processed-dataset for each of the multiple work-datasets by processing the work-datasets with the Al model,
d) generating multiple output-dataset by untangling the reference-dataset from the processed-datasets with the untangling-unit with different untangling ratios y.

It is preferred that the output-datasets are compared and one output-dataset is chosen as the best dataset.

Thus, for each pair processed, multiple work-datasets are generated with different contributions of the R-image-dataset. For example, x could be decreased from a start value (e.g., 50%) to an end value (e.g., 0%). The result will be several work-datasets from the same pair of image-datasets that become increasingly noisy.

Then these work-datasets are processed one after the other by the Al model and then untangled again with the reference-dataset (one reference-dataset for all is enough).

The untangling is preferably done with respective weight factors. When the i-th work-dataset has been mixed with a weight factor xᵢ, then the untangling is preferably done with the same weight factor xᵢ. The resulting output-datasets could then be examined for quality and the best could be chosen to work with. This embodiment allows a "scanning" through noise contribution.

According to a preferred method, the output-dataset is used for a further iteration of the method together with the reference-dataset. This is done in a way that the output-dataset is the N-image-dataset and the reference-dataset is the R-image-dataset of a further pair of image-datasets. This is especially advantageous when performing several processes on the initial image-datasets or for iterative processes. It is preferred that the Al model is trained for processing the pair of image-datasets according to at least one process-type of the group improving the measured signal quality, de-noising, reducing image artifacts, completing incomplete data.

It is preferred that the image data is tomography raw-data, especially CT raw-data or tomosynthesis raw-data, or MRI-raw-data or wherein the image data are reconstructed images, especially CT-images or tomosynthesis images or MRI-images. However, the invention is also advantageous for other noisy images, e.g., in the field of X-ray or ultrasound.

A preferred method for training a further Al model with multiple pairs of image-datasets, comprises for each of the pairs of image-datasets the steps:
a) defining an output-dataset for the pair as ground truth,
b) generating a work-dataset by mixing the R-image-dataset and the N-image-dataset of the pair,
c) using the work-dataset as input-data and the ground truth for training the Al model,
d) repeating steps b) and c) with multiple work-datasets generated with decreasing mixing ratio so that the contribution of the N-image-dataset to the work-dataset increases (see above embodiment with decreasing x).

With this training-method, an Al model can be trained in a semi-supervised manner for directly processing noisy image-data.

The use of Al-based methods (Al: "artificial intelligence") is preferred for the method according to the invention. Artificial intelligence is based on the principle of machine-based learning and is usually carried out with an adaptive Al model that has been trained accordingly. The expression "machine learning" is often used for machine-based learning, which also includes the principle of "deep learning".

The methods may also include elements of "cloud computing". In the technical field of "cloud computing", an IT infrastructure is provided over a data-network, storage space or processing power and/or application software. The communication between the user and the "cloud" is achieved by means of data interfaces and/or data transmission protocols. In the context of "cloud computing", in a preferred embodiment of the methods according to the invention, provision of data via a data channel (for example a data-network) to a "cloud" takes place. This "cloud" includes a (remote) computing system, e.g., a computer cluster that typically does not include the user's local machine. It is particularly preferred that the cloud service provides computing power as well as application software.

Other objects and features of the proposed solutions will become apparent from the following detailed descriptions considered in conjunction with the accompanying drawings. It is to be understood, however, that the drawings are solely for the purposes of illustration and not as a definition of the limits of the invention.
Figure 1 shows a roughly schematic representation of a CT-system with a device according to a proposed solution.
Figure 2 shows a system according to a proposed solution.
Figure 3 outlines the method according to a proposed solution.

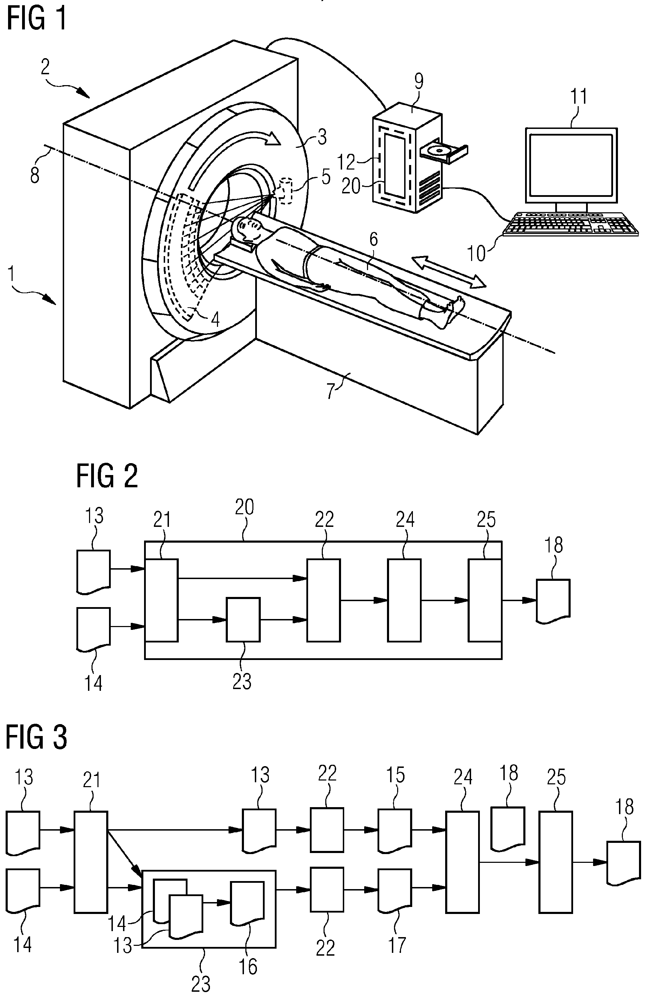

Figure 1 shows a computed tomography system (CT system 1) with an image detector 4 and an X-ray source 5. The X-ray source 5 is configured to expose the image detector 4 with X-ray radiation. The CT system 1 shown comprises a gantry 2 with a rotor 3. The rotor 3 comprises the X-ray source 5 and the image detector 4, which is configured to detect X-ray radiation.

The rotor 3 is rotatable about the rotation axis 8. A patient 6 is supported on the patient bed 7 and is movable along the rotation axis 8 through the gantry 2. The computing unit 9 is provided for controlling the CT-system 1 and/or for generating an image data set based on signals detected by the image detector 4.

A (raw) X-ray image data set of the patient 6 is typically acquired from a variety of angular directions using the image detector 4. Subsequently, an image dataset can be reconstructed based on the (raw) X-ray image dataset using a mathematical method, for example, comprising a filtered back-projection or an iterative reconstruction method.

The computing unit 9 serves here as a control device 9 for controlling the CT system 1. An input device 10 and an output device 11 are connected to this computing unit 9. The input device 10 and the output device 11 can, for example, enable interaction by a user or the display of a generated image dataset.

The control device 9 comprises a medical device 12 for processing image-data. This device 12 comprises a system 20 according to a proposed solution and as shown by figure 2.

Figure 2 shows a system 20 according to a proposed solution for processing medical image-data. It comprises a data interface 21, an Al model 22 trained for a certain process, a mixing-unit 23, an untangling-unit 24 and an output-unit 25.

The data interface 21 is configured for receiving a pair of (e.g., X-ray or MRI) image-datasets. The pair of image-datasets comprises an R-image-dataset 13 with a high signal-to-noise ratio and an N-image-dataset 14 with a low signal-to-noise ratio (see at the left).

The Al model 22 is trained for processing received image-datasets according to a predefined process-type. This could e.g., be segmenting, completing images, removing artifacts, or examination.

The mixing-unit 23 is configured for adding the R-image-dataset 13 to the N-image-dataset 14 of a pair of image-datasets in a weighted manner.

The untangling-unit 24 is configured for subtracting two image-datasets processed by the Al model 22 in a weighted manner.

The output-unit 25 is configured for outputting an image-dataset,

Figure 3 outlines the method according to a proposed solution for processing medical image-data. The method runs from the left to the right according to the arrows.

First (left) a pair of image-datasets is provided. The image-datasets may be dual-energy recordings taken from a patient. The pair of image-datasets comprises an R-image-dataset 13 with a high signal-to-noise ratio and an N-image-dataset 14 with a low signal-to-noise ratio and is received by the data interface 21 of the system 20 (see figure 2).

Then, (at the top) a reference-dataset 15 is generated by processing the R-image-dataset 13 of the pair with the Al model 22 of the system 20.

At the same time (below), a work-dataset 16 is generated by mixing the R-image-dataset 13 and the N-image-dataset 14 of the pair with the mixing-unit 23 of the system 20.

After that (still below) a processed-dataset 17 is generated by processing the work-dataset 16 with the Al model 22 of the system 20.

Then (see untangling-unit 24) an output-dataset 18 is generated by untangling the reference-dataset 15 from the processed-dataset 17 and the reference-dataset 15, with the untangling-unit 24 of the system 20.

Then (on the right) the output-dataset 18 is given to the output-unit and output.

Although the present invention has been disclosed in the form of preferred embodiments and variations thereon, it will be understood that numerous additional modifications and variations could be made thereto without departing from the scope of the invention. For the sake of clarity, it is to be understood that the use of "a" or "an" throughout this application does not exclude a plurality, and "comprising" does not exclude other steps or elements. The expression "a number of" means "at least one". The mention of a "unit" or a "device" does not preclude the use of more than one unit or device. Independent of the grammatical term usage, individuals with male, female or other gender identities are included within the term.

## Claims

1. A system (20) for processing medical image data, the system (20) comprising:
- a data interface (21), configured for receiving a pair of image-datasets, the pair of image-datasets comprising an R-image-dataset (13) with a high signal-to-noise ratio and an N-image-dataset (14) with a low signal-to-noise ratio,
- a mixing-unit (23), configured for mixing, in particular adding, the R-image-dataset (13) to the N-image-dataset (14) in a weighted mixing manner,
- an untangling-unit (24), configured for untangling, in particular subtracting, a reference-dataset (15) from a processed-dataset (17) in a weighted untangling manner,
- an output-unit (25), configured for outputting an output-dataset (18),
wherein the system (20) is configured for
a) applying an Al model (22) to the R-image-dataset (13), wherein the reference-dataset (15) is generated,
b) mixing the R-image-dataset (13) and the N-image-dataset (14) by the mixing-unit (23), wherein a work-dataset (16) is generated,
c) applying the Al model (22) to the work-dataset (16), wherein the processed-dataset (17) is generated,
d) untangling the reference-dataset (15) from the processed-dataset (17) by the untangling-unit (24), wherein the output-dataset (18) is generated,
e) outputting the output-dataset (18) by the output-unit (25).

2. The system (20) according to claim 1,
- wherein the R-image-dataset (13) is an HE-image-dataset recorded at a high X-ray energy and the N-image dataset (14) is a LE-image-dataset recorded at a low X-ray energy or
- wherein the N-image-dataset (14) is a source-image-dataset and the R-image-dataset (13) is a denoised source-image-dataset or
- wherein the R-image-dataset (13) and the N-image-dataset (14) are MRI image-datasets comprising different contrasts and/or based on different acquisition procedures.

3. The system (20) according to claim 1 or 2, wherein for generating the work-dataset (16) DW the mixing-unit (23) is configured to add the R-image-dataset (13) DR to the N-image-dataset (14) DP with a predefined weight factor x following the Formula DW = x ˙ DP + (1-x) ˙ DR, preferably wherein x > 0,5, especially x > 0,7 and x < 1.

4. The system (20) according to claim 3, wherein for generating the output-dataset (18) S the untangling-unit (24) is configured to subtract the reference-dataset (15) SR from the processed-dataset (17) SP with a predefined weight factor y following the Formula S = (SP - (1-y) ˙ SR) / y, preferably wherein y = x.

5. The system (20) according to one of the preceding claims, wherein the Al model (22) is trained for at least one process-type selected from the group consisting of
- improving the measured signal quality,
- de-noising,
- reducing image artifacts,
- completing incomplete data,
- automatizing diagnostics,
- segmenting, and
- pre-processing.

6. The system (20) according to one of the preceding claims, wherein the Al model (22) has been trained with low-noise-datasets, preferably predominantly, especially exclusively.

7. The system (20) according to one of the preceding claims, configured for handling three or more image-datasets, in that varying combinations of pairs of image-datasets are formed and the respective output-images are compared with each other or used to form further pairs of image-datasets that are again processed with the Al model (22) or with another Al model (22), trained for processing received image-datasets according to a predefined process-type, preferably wherein the system (20) comprises a first Al model (22) and a second AI model (22) trained for processing received image-datasets according to different process-types.

8. The system (20) according to one of the preceding claims, wherein the system (20) is configured for:
- generating multiple work-datasets (16) by mixing the R-image-dataset (13) and the N-image-dataset (14) with the mixing-unit (23) with different mixing ratios x,
- generating a processed-dataset (17) for each of the multiple work-datasets (16) by processing the work-datasets (16) with the Al model (22),
- generating multiple output-dataset (18) by untangling the reference-dataset (15) from the processed-datasets (17) with the untangling-unit (24) with different untangling ratios y, preferably wherein the output-datasets (18) are compared and one output-dataset (18) is chosen as a best dataset.

9. A computer-implemented method for processing medical image data, the method comprising:
- receiving a pair of image-datasets, the pair of image-datasets comprising an R-image-dataset (13) with a high signal-to-noise ratio and an N-image-dataset (14) with a low signal-to-noise ratio,
- applying an Al model (22) to the R-image-dataset (13), wherein a reference-dataset (15) is generated,
- mixing the R-image-dataset (13) and the N-image-dataset (14) by a mixing-unit (23) in a weighted mixing manner, wherein a work-dataset (16) is generated,
- applying the Al model (22) to the work-dataset (16), wherein a processed-dataset (17) is generated,
- untangling the reference-dataset (15) from the processed-dataset (17) by an untangling-unit (24) in a weighted untangling manner, wherein the output-dataset (18) is generated,
- outputting the output-dataset (18) by an output-unit (25).

10. The method according to claim 9,
- wherein the output-dataset (18) is used for a further iteration of the method together with the reference-dataset (15) so that the output-dataset (18) is the N-image-dataset (14) of a further pair of image-datasets and the reference-dataset (15) is the R-image-dataset (13) of the further pair of image-datasets, preferably wherein the Al model (22) is trained for at least one process-type selected from the group consisting of improving the measured signal quality, de-noising, reducing image artifacts, completing incomplete data, preferably wherein the image data is tomography raw-data, especially CT raw-data or tomosynthesis raw-data, or MRI-raw-data or wherein the image data are reconstructed images, especially CT-images or tomosynthesis images or MRI-images.

11. The method according to claim 9 or 10, for training a further Al model (22) with multiple pairs of image-datasets, comprising for each of the pairs of image-datasets the steps:
a) defining an output-dataset (18) for the pair as ground truth,
b) generating a work-dataset (16) by mixing the R-image-dataset (13) and the N-image-dataset (14) of the pair,
c) using the work-dataset (16) as input-data and the ground truth for training the Al model (22),
d) repeating steps b) and c) with multiple work-datasets (16) generated with decreasing mixing ratio so that the contribution of the N-image-dataset (14) to the work-dataset (16) increases.

12. A medical device (12) for processing image data, the medical device (12) comprising a system (20) according to one of claims 1 to 8, and/or configured for performing a method according to claim 9 or 10.

13. A medical system (1), especially a medical imaging system or a diagnostic system, comprising a device (12) according to claim 12.

14. A computer program product comprising instructions which, when the program is executed by a computer, cause the computer to carry out the method according to any of the claims 9 to 10 or performing the work of a system (20) according to one of claims 1 to 8.

15. A computer-readable medium comprising instructions which, when executed by a computer, cause the computer to carry out the training-method according to any of the claims 9 to 10 or performing the work of a system (20) according to one of claims 1 to 8.
